(19) Europäisches Patentamt
European Patent Office
Office européen des brevets

(11) EP 0 970 973 B1

(12) **FASCICULE DE BREVET EUROPEEN**

(45) Date de publication et mention de la délivrance du brevet:
**08.12.2004 Bulletin 2004/50**

(51) Int Cl.[7]: **C08F 4/00**, C08F 2/38

(21) Numéro de dépôt: **99112156.7**

(22) Date de dépôt: **24.06.1999**

(54) **Polymérisation en émulsion en présence d'un radical libre stable**

Emulsionspolymerisation in Anwesenheit eines stabilen freien Radikals

Emulsion polymerisation in the presence of a stable free radical

(84) Etats contractants désignés:
**AT BE DE ES FI FR GB IT NL SE**

(30) Priorité: **10.07.1998 FR 9808916**
**30.03.1999 FR 9903941**

(43) Date de publication de la demande:
**12.01.2000 Bulletin 2000/02**

(73) Titulaire: **Atofina**
**92800 Puteaux (FR)**

(72) Inventeurs:
- **Charleux, Bernadette**
**94300 Vincennes (FR)**
- **Lansalot, Muriel**
**75013 Paris (FR)**
- **Pirri, Rosangela**
**64121 Montardon (FR)**
- **Vairon, Jean-Pierre**
**92340 Bourg-La-Reine (FR)**
- **Denie, Sandrine**
**64000 Pau (FR)**

(56) Documents cités:
**EP-A- 0 135 280** **WO-A-94/11412**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 970 973 B1

Printed by Jouve, 75001 PARIS (FR)

## Description

L'invention concerne un procédé de polymérisation d'au moins un monomère polymérisable par voie radicalaire, en émulsion, laquelle comprend une phase aqueuse liquide et une phase organique liquide , ladite phase aqueuse comprenant au moins 50 % en poids d'eau, ladite phase organique liquide comprenant plus de 50 % en poids de monomère(s) à polymériser, en présence d'un radical libre stable. L'invention mène, par un procédé de polymérisation contrôlée rapide, à un latex de particules de polymère. Le polymère obtenu présente une polydispersité (rapport de la masse moléculaire moyenne en poids sur la masse moléculaire moyenne en nombre, Mw / Mn) faible. Un procédé de polymérisation est contrôlé si la masse moléculaire moyenne en nombre augmente linéairement en fonction du degré de conversion de monomère en polymère. Plus on s'écarte de la linéarité, moins le contrôle est bon. Un système de polymérisation contrôlé est également un système de polymérisation vivant et permet de ce fait la réalisation de copolymères à blocs. L'invention permet en particulier la préparation de polymères séquencés comprenant des blocs du type acrylate et/ou méthacrylate.

L'émulsion comprend une phase aqueuse et une phase organique. La phase aqueuse comprend au moins 50 % en poids d'eau. La phase organique liquide comprend, à chaque instant de la polymérisation, plus de 50 % en poids de monomère restant à polymériser.

L'émulsion comprend également un agent émulsifiant et, de préférence, un amorceur de polymérisation radicalaire.

La phase aqueuse est la phase continue de l'émulsion, de sorte que c'est la phase organique qui se trouve dispersée sous la forme de gouttelettes.

L'émulsion comprend un radical libre stable.

Il ne faut pas confondre un radical libre stable avec les radicaux libres dont la durée de vie est éphémère (quelques millisecondes) comme les radicaux libres issus des amorceurs habituels de polymérisation comme les peroxydes, hydroperoxydes et amorceurs de type azoïques. Les radicaux libres amorceurs de polymérisation tendent à accélérer la polymérisation. Au contraire, les radicaux libres stables tendent généralement à ralentir la polymérisation. On peut généralement dire qu'un radical libre est stable au sens de la présente invention s'il n'est pas amorceur de polymérisation et si, dans les conditions d'utilisation de la présente invention, la durée moyenne de vie du radical est d'au moins cinq minutes. Au cours de cette période de vie, les molécules du radical libre stable alternent en permanence l'état de radical et l'état de groupement lié à une chaîne de polymère par une liaison covalente. Bien entendu, il est préférable que le radical libre stable présente une bonne stabilité pendant toute la durée de son utilisation dans le cadre de la présente invention. Généralement, un radical libre stable peut être isolé à l'état de radical à la température ambiante. Un radical libre stable est suffisamment stable pour que son état de radical libre puisse être caractérisé par les méthodes spectroscopiques.

Le radical libre stable forme pendant la polymérisation une liaison réversible avec la chaîne de polymère en croissance. En bout de chaîne de polymère, le radical libre stable alterne en permanence l'état de groupement lié à ladite chaîne par une liaison covalente et l'état de radical libre stable détaché de ladite chaîne pour laisser s'insérer une unité de monomère, suivant le processus suivant,

$$1)\quad -M-Y \rightleftharpoons -M^{\bullet} + Y^{\bullet}$$

$$2)\quad -M^{\bullet} + M + Y^{\bullet} \rightarrow -M-M-Y$$

dans lequel -M représente une unité de monomère de la chaîne en croissance, M représente une unité de monomère et $Y^{\bullet}$ représente le radical libre stable pour le cas où ce dernier est monofonctionnel ($F_{SFR} = 1$, $F_{SFR}$ représentant la fonctionnalité du radical libre stable, c'est-à-dire le nombre de sites sur la même molécule de radical libre stable présentant l'état de radical). Ce processus se repète pour faire croître la chaîne de polymère par insertion de monomère entre la chaîne en croissance et le radical libre stable.

Il est rappelé que la notion de radical libre stable est connue de l'homme du métier pour désigner un radical tellement persistant et non réactif vis-à-vis de l'air et de l'humidité dans l'air ambiant, que le radical pur peut être manipulé et stocké sans plus de précautions à la température ambiante que le sont la majorité des produits chimiques commerciaux (voir à ce sujet D. Griller et K. Ingold, Accounts of Chemical Research, 1976, 9, 13-19, ou Organic Chemistry of Stable Free Radicals, A. Forrester et coll., Academic Press, 1968).

La famille des radicaux libres stables inclut notamment les composés agissant comme inhibiteurs de polymérisation radicalaire pour le stockage de monomères, les radicaux nitroxyles stables c'est-à-dire comprenant le groupement = N-O•.

On peut utiliser comme radical libre stable par exemple les radicaux représentés par les formules suivantes :

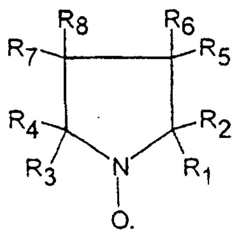 , 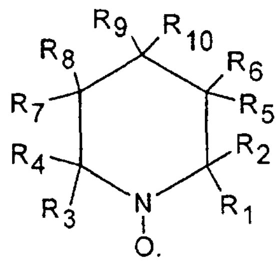 , 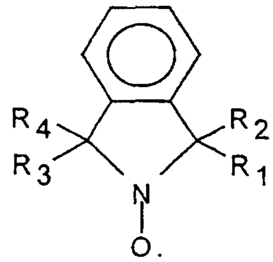 ,

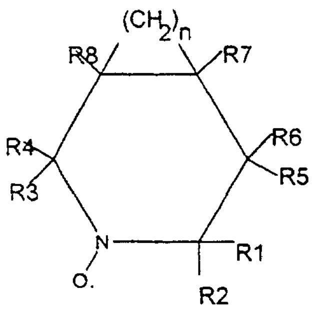 , 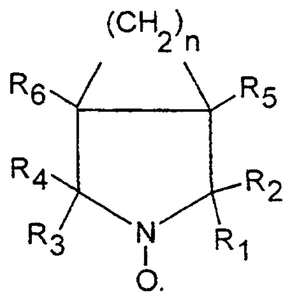 , 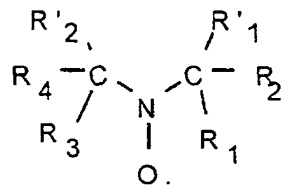

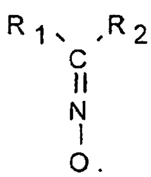 , 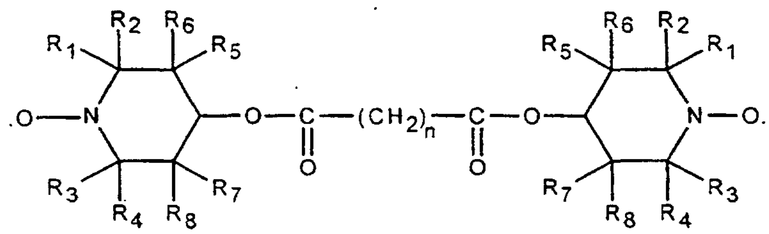 ,

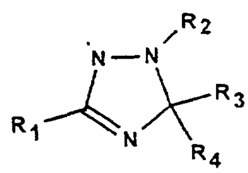

dans lesquelles n représente un nombre entier non nul et R1, R2, R3, R4, R'1 et R'2 pouvant être identiques ou différents représentent un atome d'hydrogène, un atome d'halogène tel que le chlore, le brome ou l'iode, un groupement hydrocarboné linéaire, ramifié ou cyclique, saturé ou insaturé tel qu'un radical alkyle ou phényle, ou un groupement ester -COOR ou un groupement alcoxyle -OR, ou un groupement phosphonate $-PO(OR)_2$, ou une chaîne de polymère pouvant par exemple être une chaîne de poly(méth)acrylate d'alkyle comme le polyméthacrylate de méthyle, de polydiène comme le polybutadiène, de polyoléfine comme de polyéthylène ou de polypropylène, mais étant de préférence une chaîne de polystyrène, et dans lesquelles R5, R6, R7, R8, R9 et R10, pouvant être identiques ou différents, peuvent être choisis dans la même famille de groupement que celle qui vient d'être envisagée pour R1, R2, R3, R4, R'1 et R'2, et de plus peuvent représenter un groupement hydroxyde -OH, un groupement acide tel que -COOH ou $-PO(OH)_2$ ou $-SO_3H$.

En particulier, le radical libre stable peut être le 2,2,5,5-tétraméthyl-1-pyrrolidinyloxy commercialisé sous la marque PROXYL, le 2,2,6,6-tétraméthyl-1-piperidinyloxy, généralement commercialisé sous la dénomination TEMPO, le 4-hydroxy-2,2,6,6-tétraméthyl-1-pipéridinyloxy commercialisé sous la dénomination 4-hydroxy TEMPO, ou le bis (1-oxyl-2,2,6,6-tétraméthylpipéridine-4-yl)sébacate commercialisé sous la marque CXA 5415 par la société Ciba Specialty Chemical.

Le radical libre stable peut également être choisi dans la liste suivante :

- N-tertiobutyl-1-phényl-2 méthyl propyl nitroxyde,
- N-tertiobutyl-1-(2-naphtyl)-2-méthyl propyl nitroxyde,
- N-tertiobutyl-1-diéthylphosphono-2,2-diméthyl propyl nitroxyde,
- N-tertiobutyl-1-dibenzylphosphono-2,2-diméthyl propyl nitroxyde,
- N-phényl-1-diéthyl phosphono-2,2-diméthyl propyl nitroxyde,
- N-phényl-1-diéthyl phosphono-1-méthyl éthyl nitroxyde,
- N-(1-phényl 2-méthyl propyl)-1-diéthylphosphono-1-méthyl éthyl nitroxyde,
- 4-oxo-2,2,6,6-tétraméthyl-1-piperidinyloxy,
- 2,4,6-tri-tert-butylphenoxy.

De préférence, le radical libre stable comprend un enchaînement de formule :

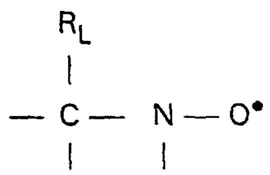

(1)

dans laquelle le radical $R_L$ présente une masse molaire supérieure à 15. Le radical $R_L$ peut par exemple être choisi dans la liste des radicaux précédemment envisagés pour $R^1$, $R^2$, $R^3$, $R^4$, $R'^1$ et $R'^2$, dès lors qu'ils présentent une masse molaire supérieure à 15. Le radical $R_L$, monovalent, est dit en position β par rapport à l'atome d'azote du radical nitroxyde. Les valences restantes de l'atome de carbone et de l'atome d'azote dans la formule (1) peuvent être liées à des radicaux divers tels qu'un atome d'hydrogène, un radical hydrocarboné comme un radical alkyle, aryle ou aralkyle, comprenant de 1 à 10 atomes de carbone. Il n'est pas exclu que l'atome de carbone et l'atome d'azote dans la formule (1) soient reliés entre eux par l'intermédiaire d'un radical bivalent, de façon à former un cycle. De préférence cependant, les valences restantes de l'atome de carbone et de l'atome d'azote de la formule (1) sont liées à des radicaux monovalents. De préférence, le radical $R_L$ présente une masse molaire supérieure à 30. Le radical $R_L$ peut par exemple avoir une masse molaire comprise entre 40 et 450. A titre d'exemple, le radical $R_L$ peut être un radical comprenant un groupement phosphoryle, ledit radical $R_L$ pouvant être représenté par la formule :

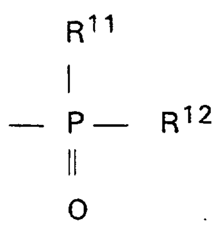

(2)

dans laquelle $R^{11}$ et $R^{12}$, pouvant être identiques ou différents, peuvent être choisis parmi les radicaux alkyle, cycloalkyle, alkoxyle, aryloxyle, aryle, aralkyloxyle, perfluoroalkyle, aralkyle, et peuvent comprendre de 1 à 20 atomes de carbone. $R^{11}$ et/ou $R^{12}$ peuvent également être un atome d'halogène comme un atome de chlore ou de brome ou de fluor ou d'iode. Le radical $R_L$ peut également comprendre au moins un cycle aromatique comme pour le radical phényle ou le radical naphtyle, ce dernier pouvant être substitué, par exemple par un radical alkyle comprenant de 1 à 4 atomes de carbone.

Le radical libre stable peut être introduit de façon à ce que (SFR) x $F_{(SFR)}$ aille de $1.10^{-1}$ à $1.10^{-3}$ mole par mole de monomère, (SFR) représentant le nombre de moles de radical libre stable dans l'émulsion, $F_{(SFR)}$ représentant la fonctionnalité du radical libre stable, c'est-à-dire le nombre de sites sur la même molécule de radical libre stable présentant l'état de radical.

Comme exemple de radical libre stable dont la fonctionnalité $F_{SFR}$ est égale à 1, on peut citer une molécule représentée par

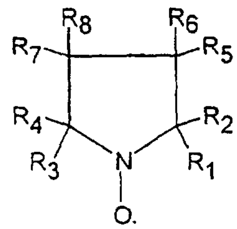

dont les groupements R1, R2, R3, R4, R5, R6, R7 et R8 représentent des radicaux alkyle.

Comme exemple de radical libre stable dont la fonctionnalité $F_{SFR}$ est égale à 2, on peut citer une molécule représentée par :

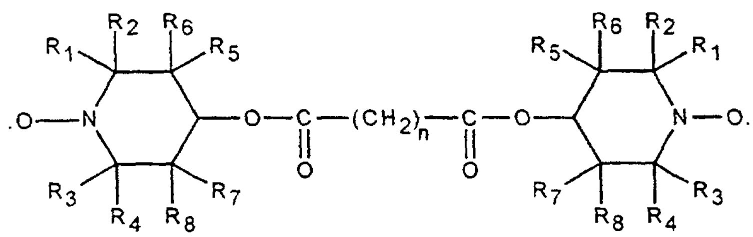

dont les groupements $R_1$, $R_2$, $R_3$, $R_4$, $R_5$, $R_6$, $R_7$, $R_8$ représentent des radicaux alkyle et n représente un nombre entier non nul.

De préférence, le radical libre stable est soluble dans l'eau à 25°C à raison d'au moins 0,1 g/litre et, de manière encore préférée 1 g/litre d'eau.

Tout amorceur de polymérisation peut être utilisé, comme les peroxydes et hydroperoxydes organiques, comme par exemple le peroxyde de dibenzoyle ou le peroxyde de dicumyle ou le 3,3-di(tert-amylperoxy)-butyrate d'éthyle. Comme amorceur, on peut également citer:

- les dérivés azo suivants :

    azo bis (isobutyronitrile),
    acide azo-4,4'-bis(cyano-4-pentanoïque),
    dichlorhydrate de 2,2'-azo bis (2-amidinopropane),

- les persels, en particulier les persulfates comme le persulfate de potassium ($K_2S_2O_8$) ou le persulfate d'ammonium,
- les couples redox tels que $Fe^{2+}/H_2O_2$, $ROH/Ce^{4+}$ (R étant ici un radical organique tel qu'un radical alkyle ou aryle), $K_2S_2O_8$ / $Fe^{2+}$, $K_2S_2O_8$ / $Na_2S_2O_5$.

De préférence, l'amorceur est hydrosoluble, c'est-à-dire que sa solubilité dans la phase aqueuse est d'au moins 1g/litre à 25°C. Cette condition sur l'hydrosolubilité de l'amorceur est plus importante lorsque l'émulsion n'est pas une miniémulsion. On peut ajouter dans la phase aqueuse un tiers corps de façon à augmenter la solubilité de l'amorceur dans ladite phase aqueuse. Par exemple, si l'amorceur est l'acide azo-4,4'-bis(cyano-4-pentanoïque), le tiers corps peut être de la soude ou de la potasse ou de l'ammoniac. Le tiers corps peut être présent dans la phase aqueuse à raison d'une mole de tiers corps par mole d'amorceur.

L'amorceur peut être introduit de façon à ce que (AMO) x $F_{AMO}$ aille de $1.10^{-4}$ à $1.10^{-1}$ mole par mole de monomère, (AMO) représentant le nombre de moles d'amorceur, $F_{AMO}$ représentant la fonctionnalité de l'amorceur, c'est-à-dire le nombre de sites présentant l'état de radical libre que chaque molécule d'amorceur est capable de générer.

Comme exemple d'amorceur dont la fonctionnalité $F_{AMO}$ est de 2, on peut citer $K_2S_2O_8$.

Comme exemple d'amorceur dont la fonctionnalité $F_{AMO}$ est de 4, on peut citer le 3,3-di(tert-amylperoxy)-butyrate d'éthyle que l'on peut représenter par :

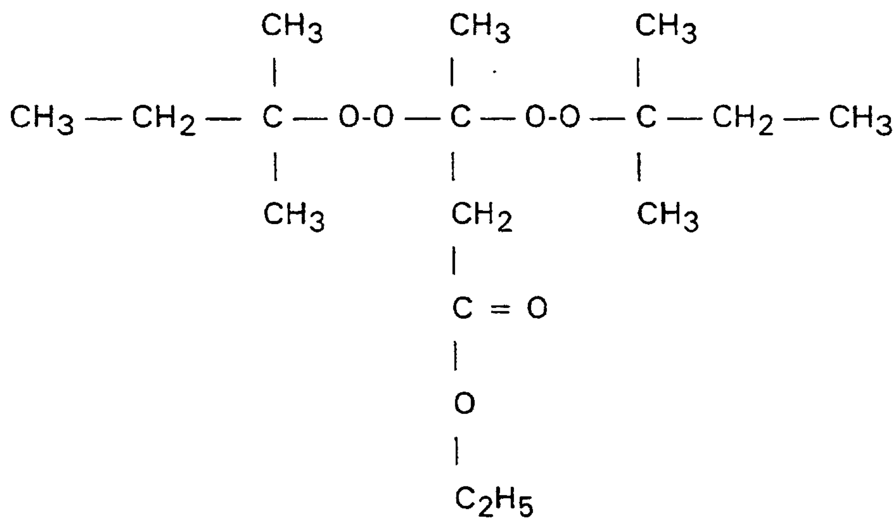

car il contient deux enchaînements — O — O — susceptibles chacun de générer deux sites présentant l'état de radical libre, à savoir — O•.

De préférence, le rapport [$F_{SFR}$ x (SFR)] / [$F_{AMO}$ x (AMO)] va de 0,1 à 5.

Le radical libre stable peut être introduit dans le milieu de polymérisaiton sous la forme de radical libre stable ou sous la forme d'une molécule comprenant un groupement capable de générer un radical libre stable lors de la polymérisation.

Par exemple, pour le cas où l'on introduit dans le milieu de polymérisation une molécule comprenant un groupement que l'on pourrait représenter par — A — Y, ledit groupement étant capable de générer un radical libre stable Y• lors de la polymérisation, il faut prendre en compte la totalité des groupements — A — Y introduits au départ, dans le cadre de la détermination de la quantité (SFR) citée plus haut. Toujours dans le cadre de cet exemple, si, simultanément à la formation de Y•, le groupement — A• est amorceur de polymérisation, il faut également prendre en compte la totalité des groupements — A — Y introduits au départ dans le cadre de la détermination de la quantité (AMO) citée plus haut.

Un composé présentant un tel groupement — A — Y capable de générer un radical libre stable Y• lors de la polymérisation peut être l'agent émulsifiant lui-même. Un tel agent émulsifiant porteur d'un groupement générateur d'un radical libre stable peut être réalisé par traitement thermique d'un agent émulsifiant présentant une chaîne hydrocarbonée comprenant de préférence au moins 5 atomes de carbone en présence d'un radical libre stable et d'un initiateur de radicaux libres capable d'arracher un proton de la chaîne hydrocarbonée. Un tel traitement thermique peut par exemple être réalisé de 70°C à 150°C et de préférence de 80°C à 125°C sur un milieu comprenant : $4.10^{-3}$ à $1.10^{-2}$ mole d'agent émulsifiant, $4.10^{-3}$ à $1.10^{-2}$ mole d'initiateur, $4.10^{-2}$ à $1.10^{-1}$ mole de solvant. Le solvant peut par exemple être l'eau, un alcool comme l'éthanol ou tout autre solvant polaire capable de solubiliser l'agent émulsifiant.

Un tel initiateur peut être un peroxyde ou hydroperoxyde organique et peut par exemple être choisi dans la liste suivante :

tert-butyl-isopropylmonoperoxycarbonate,
tert-butyl(2-éthyl hexyl) monoperoxycarbonate,
peroxyde de dicumyle,
peroxyde de ditertiobutyle,
1,1 di(tertiobutylperoxy)cyclohexane,
1,1 di(tertiobutylperoxy)-3,3,5-triméthylcyclohexane,
tertiobutylperoxyacétate,
peroxyde de cumyle et de tertiobutyle,
tertiobutylperoxybenzoate,
tertiobutylperoxy-2éthylhexanoate.

De préférence, le radical libre stable est introduit dans le milieu de polymérisation au moins partiellement sous forme liée à l'agent émulsifiant, c'est-à-dire que l'agent émulsifiant est de préférence, au moins partiellement, porteur d'un groupement générateur de radical libre stable.

De cette façon, le radical libre stable est particulièrement efficace, de sorte qu'il est possible d'en introduire

une plus faible quantité en comparaison avec le même procédé dans lequel le radical libre stable ne serait pas porté par l'agent émulsifiant.

La chaîne hydrocarbonée appartient à la partie hydrophobe de l'agent émulsifiant. Cette chaîne peut être du type alkyle, polystyrène, ou peut être une chaîne grasse.

L'agent émulsifiant est un tensio-actif permettant de stabiliser l'émulsion. Tout agent émulsifiant habituel à ce genre d'émulsion peut être utilisé.

L'agent émulsifiant peut être anionique, cationique ou non ionique. L'agent émulsifiant peut être un tensio-actif amphotère ou quaternaire ou fluoré. Il peut être choisi parmi les sulfates d'alkyle ou d'aryle, les sulfonates d'alkyle ou d'aryle, les sels d'acide gras, les alcools polyvinyliques, les alcools gras polyéthoxylés. A titre d'exemple, l'agent émulsifiant peut être choisi dans la liste suivante :

- laurylsulfate de sodium,
- dodecylbenzenesulfonate de sodium,
- stearate de sodium,
- nonylphénolpolyéthoxylé,
- dihexylsulfosuccinate de sodium,
- dioctylsulfosuccinate de sodium,
- bromure de lauryl diméthyl ammonium,
- lauryl amido bétaine,
- perfluoro octyl acétate de potassium.

L'agent émulsifiant peut également être un copolymère amphiphile à blocs ou statistique ou greffé, comme les copolymères du styrène sulfonate de sodium et en particulier le polystyrène-b-poly(styrène sulfonate de sodium).

L'agent émulsifiant peut être introduit dans le milieu de polymérisation à raison de 1 à 10 % en masse par rapport à la masse de monomère.

L'émulsion peut être une miniémulsion, c'est-à-dire une émulsion dans laquelle la phase organique forme des gouttelettes au diamètre inférieur à 2 µm, généralement allant de 100 à 1 000 nanomètres.

L'état de miniémulsion est obtenu grâce à un cisaillement suffisant du milieu et grâce à la présence dans la miniémulsion d'un polymère hydrophobe et d'un co-solvant.

Le polymère hydrophobe doit être soluble dans la phase organique, présente de préférence une solubilité dans l'eau à 25°C inférieure à $1.10^{-6}$g/litre et présente une masse moléculaire moyenne en poids au moins égale à 100 000, par exemple allant de 100 000 à 400 000. A titre d'exemple, le polymère hydrophobe peut être le polystyrène, le polyméthacrylate de méthyle, le polyacrylate de butyle.

Le polymère hydrophobe peut être introduit dans l'émulsion à raison de 0,5 à 2 % en poids par rapport au monomère à polymériser.

Le co-solvant présente un enchaînement hydrocarboné d'au moins six atomes de carbone, présente une solubilité dans l'eau à 25°C inférieure à $1.10^{-6}$ g/litre et est liquide à la température de polymérisation.

Si le co-solvant ne contient pas d'atomes de fluor, l'enchaînement hydrocarboné comprend de préférence au moins 12 atomes de carbone.

A titre d'exemple, le co-solvant peut être :

- l'hexadécane,
- le méthacrylate de stéaryle,
- le méthacrylate de dodécyle,
- le méthacrylate de perfluorooctyle.

Le cisaillement suffisant pour l'obtention de l'état de miniémulsion peut être réalisé par une agitation vigoureuse par exemple obtenue par ultrason. Une fois l'état de miniémulsion obtenu, il est généralement possible de diminuer le cisaillement en le ramenant à celui habituel aux émulsions en général tout en conservant l'état de miniémulsion.

Par monomère, on entend tout monomère polymérisable ou copolymérisable par voie radicalaire. Le terme "monomère" recouvre bien entendu les mélanges de plusieurs monomères.

Le monomère peut être choisi parmi les monomères vinyliques, vinylidéniques, diéniques et oléfiniques, allyliques.

Par monomères vinyliques, on entend les (méth)acrylates, les monomères vinylaromatiques, les esters vinyliques, le (méth)acrylonitrile, le (méth)acrylamide et les mono- et di-(alkyl à 1 à 18 atomes de carbone)-(méth)acrylamides, et les monoesters et diesters de l'anhydride maléique et de l'acide maléique.

Les (méth)acrylates sont en particulier ceux des formules respectivement :

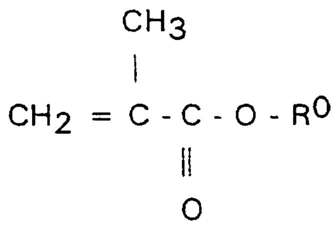

et

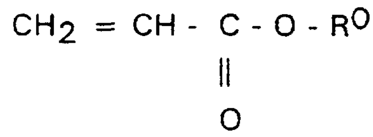

dans lesquelles $R^O$ est choisi parmi les radicaux alkyle comprenant de 1 à 18 atomes de carbone, linéaires ou ramifiés, primaires, secondaires ou tertiaires, cycloalkyle comprenant de 5 à 18 atomes de carbone, (alcoxy à 1 à 18 atomes de carbone)-alkyle à 1 à 18 atomes de carbone, (alkylthio à 1 à 18 atomes de carbone)-alkyle à 1 à 18 atomes de carbone, aryle et arylalkyle, ces radicaux étant éventuellement substitués par au moins un atome d'halogène (tel que le fluor) et/ou au moins un groupe hydroxyle après protection de ce groupe hydroxyle, les groupes alkyle ci-dessus étant linéaires ou ramifiés ; et les (méth)acrylates de glycidyle, de norbornyle, d'isobornyle.

Comme exemples de méthacrylates utiles, on peut citer les méthacrylates de méthyle, d'éthyle, de 2,2,2-trifluoroéthyle, de n-propyle, d'isopropyle, de n-butyle, de sec.-butyle, de tert.-butyle, de n-amyle, d'iamyle,de n-hexyle, de 2-éthylhexyle, de cyclohexyle, d'octyle, d'i-octyle, de nonyle, de décyle, de lauryle, de stéaryle, de phényle, de benzyle, de β-hydroxy-éthyle, d'isobornyle, d'hydroxypropyle, d'hydroxybutyle.

Comme exemples d'acrylates de la formule ci-dessus, on peut citer les acrylates de méthyle, d'éthyle, de n-propyle, d'isopropyle, de n-butyle, de sec.-butyle, de tert.-butyle d'hexyle, de 2-éthylhexyle, d'isooctyle, de 3,3,5-triméthylhexyle, de nonyle, d'isodécyle, de lauryle, d'octadécyle, de cyclohexyle, de phényle, de méthoxyméthyle, de méthoxyéthyle, d'éthoxyméthyle, d'éthoxyéthyle, de perfluorooctyle, de behenyle.

Par monomère vinylaromatique au sens de la présente invention, on entend un monomère aromatique à insaturation éthylénique tel que le styrène, le vinyltoluène, l'alphaméthylstyrène, le méthyl-4-styrène, le méthyl-3-styrène, le méthoxy-4-styrène, l'hydroxyméthyl-2-styrène, l'éthyl-4-styrène, l'éthoxy-4-styrène, le diméthyl-3,4-styrène, le chloro-2-styrène, le chloro-3-styrène, le chloro-4-méthyl-3-styrène, le tert.-butyl-3-styrène, le dichloro-2,4-styrène, le dichloro-2,6-styrène et le vinyl-1-naphtalène.

Comme esters vinyliques, on peut citer l'acétate de vinyle, le propionate de vinyle, le chlorure de vinyle et le fluorure de vinyle.

Comme monomère vinylidénique, on cite le fluorure de vinylidène.

Par monomère diénique, on entend un diène choisi parmi les diènes linéaires ou cycliques, conjugués ou non-conjugués comme par exemple le butadiène, le 2,3-diméthyl-butadiène, l'isoprène, le 1,3-pentadiène, le 1,4-pentadiène, le 1,4-hexadiène, le 1,5-hexadiène, le 1,9-décadiène, le 5-méthylène-2-norbornène, le 5-vinyl-2-norbornène, les 2-alkyl-2,5-norbornadiènes, le 5-éthylène-2-norbornène, le 5-(2-propényl)-2-norbornène, le 5-(5-héxényl)-2-norbornène, le 1,5-cyclooctadiène, le bicyclo[2,2,2]octa-2,5-diène, le cyclopentadiène, le 4,7,8,9-tétrahydroindène et l'isopropylidène tétrahydroindène.

Comme monomères oléfiniques, on peut citer l'éthylène, le butène, l'hexène et le 1-octène. Les monomères oléfiniques fluorés peuvent également être cités.

Le procédé selon l'invention permet la préparation de polymères à blocs. En effet, la polymérisation d'un premier monomère par le procédé selon l'invention mène à un bloc de polymère vivant. Il est alors possible de raccorder à ce premier bloc, un bloc d'un autre polymère en plaçant le premier bloc de polymère vivant dans un milieu de polymérisation d'un second monomère. Il est ainsi possible de réaliser des copolymères à blocs, par exemple, des copolymères comprenant un ou plusieurs blocs de polystyrène et un ou plusieurs blocs de polybutadiène, ou des copolymères comprenant un ou plusieurs blocs de polystyrène et un ou plusieurs blocs du type méthacrylate et un ou plusieurs blocs du type acrylate.

En pratique, la réalisation des blocs peut se faire à la suite les uns des autres, dans le même appareillage. Lorsque le premier monomère est consommé de façon à réaliser le premier bloc, il suffit d'introduire le second monomère destiné à la réalisation du second bloc, sans arrêter l'agitation et sans refroidissement ou autre interruption. Bien entendu, suivant la nature des monomères, les conditions de constitution de chacun des blocs, comme la température de l'émulsion, pourra être adaptée.

Bien entendu, il est possible d'accoler autant de blocs que l'on souhaite au polymère vivant en plaçant celui-ci dans un milieu de polymérisation d'un monomère dont on souhaite constituer un bloc.

Ainsi, l'invention concerne également un procédé de préparation d'un polymère à blocs comprenant au moins une étape selon l'invention, menant à un premier bloc vivant, ledit bloc vivant étant ensuite placé en présence d'au moins un autre monomère dont on souhaite constituer un bloc accolé au premier bloc, de façon à former un dibloc vivant, et ainsi de suite, suivant le nombre de blocs que l'on souhaite réaliser.

Ainsi, la présente demande concerne également un procédé de préparation d'un polymère dibloc comprenant une étape de polymérisation d'un premier monomère conformément à l'invention, de façon à obtenir un premier bloc vivant, suivie d'une étape au cours de laquelle le premier bloc vivant est placé en présence d'un second monomère que l'on polymérise de façon à former un second bloc accolé au premier bloc.
La présente demande concerne donc également un procédé de préparation d'un polymère tribloc comprenant une étape de polymérisation d'un troisième monomère en présence du polymère dibloc préparé conformément à ce qui vient d'être dit, de façon à former un troisième bloc accolé au polymère dibloc.
A titre d'exemples, les polymères à blocs suivants peuvent être réalisés :

polystyrène-b-polyméthacrylate de méthyle,
polystyrène-b-polystyrènesulfonate,
polystyrène-b-polyacrylamide,
polystyrène-b-polyméthacrylamide,
polyméthacrylate de méthyle-b-polyacrylate d'éthyle,
polystyrène-b-polyacrylate de butyle,
polybutadiène-b-polyméthacrylate de méthyle,
polyisoprène-b-polystyrène-co-acrylonitrile,
polybutadiène-b-polystyrène-co-acrylonitrile,
polystyrène-co-acrylate de butyle-b-polyméthacrylate de méthyle,
polystyrène-b-polyacétate de vinyle,
polystyrène-b-polyacrylate de 2-éthylhexyle,
polystyrène-b-polyméthacrylate de méthyle-co-acrylate d'hydroxyéthyle,
polystyrène-b-polybutadiène-b-polyméthacrylate de méthyle,
polybutadiène-b-polystyrène-b-polyméthacrylate de méthyle,
polystyrène-b-polyacrylate de butyle-b-polystyrène,
polystyrène-b-polybutadiène-b-polystyrène,
polystyrène-b-polyisoprène-b-polystyrène,
polyacrylate de perfluorooctyle-b-polyméthacrylate de méthyle,
polyacrylate de perfluorooctyle-b-polystyrène,
polyacrylate de perfluorooctyle-b-polyacrylate de behenyle,
polyacrylate de perfluorooctyle-b-polyméthacrylate de stéaryle,
polyacrylate de n-octyle-b-polyméthacrylate de méthyle.

Pour le cas de la réalisation de copolymères à blocs, et pour le cas où un agent émulsifiant porteur d'un groupement générateur d'un radical libre stable est utilisé, il est possible d'ajouter de l'amorceur en quantité telle que $F_{AMO}$ x (AMO) aille de 0 à $2,5.10^{-2}$ mole par mole de nouveau monomère (ces valeurs n'incluent pas les quantités d'amorceur utilisées pour la réalisation du ou des blocs précédents), au moment de l'ajout d'un nouveau monomère, de façon à augmenter la vitesse de polymérisation. Par "nouveau monomère", on entend le monomère destiné à former un nouveau bloc (il ne s'agit donc pas du premier bloc) au sein du polymère séquencé.
Dans le cadre de la présente invention, le terme polymère est à prendre en son sens général, de sorte qu'il recouvre les homopolymères, copolymères, terpolymères et mélanges de polymère. Le terme polymérisation est à prendre en un sens aussi général.
Lorsqu'on se propose de réaliser un polymère comprenant des unités polymérisées du type acrylate ou méthacrylate (c'est-à-dire "(méth)acrylate"), et plus particulièrement lorsqu'on se propose de réaliser un copolymère en commençant la polymérisation par des unités du type acrylate, on utilise de manière particulièrement préférée un radical libre stable comprenant un enchaînement de formule

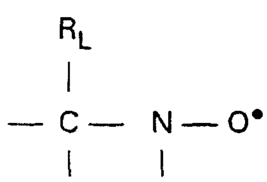

(1)

comme décrit précédemment.
De préférence, afin d'améliorer la stabilité chimique de l'émulsion et en particulier de minimiser la dégradation du monomère en milieu acide, il est préférable d'introduire dans l'émulsion une quantité suffisante d'un composé "tampon pH" permettant de maintenir le pH entre 5 et 8,5 et de manière préférée entre 6 et 7. Un tel composé peut par exemple être le phosphate disodique ($Na_2HPO_4$) ou hydrogénocarbonate de sodium ($NaHCO_3$), ou $K_2CO_3$.

Pour les radicaux libres stables de type nitroxyde ayant tendance à s'hydrolyser, suivant le cas en pH acide ou en pH basique, le composé tampon pH peut également servir à éviter cette dégradation ou à la provoquer le cas échéant de façon contrôlée.

La polymérisation se déroule de façon plus rapide si le pH est à plutôt faible valeur, c'est- à- dire à pH inférieur à 7, en comparaison avec une polymérisation se déroulant à un pH supérieur à 7. Ainsi, il est possible de réaliser la polymérisation à un pH inférieur à 7, par exemple allant de 2 à 4 si l'on souhaite une forte vitesse de polymérisation, sachant que cet effet se traduit généralement également par un moins bon contrôle de la polymérisation.

L'émulsion peut être réalisée par mélange sous agitation d'une phase aqueuse comprenant :

- l'eau,
- l'amorceur,
- l'agent émulsifiant, éventuellement porteur d'un groupement générateur du radical libre stable,

et d'une phase organique comprenant :

- le monomère,
- l'éventuel solvant organique,
- le radical libre stable s'il n'est pas porté par l'agent émulsifiant,
- l'éventuel co-solvant.

Le procédé selon l'invention peut être mené, au moins partiellement, à une température allant de 50 à 140°C, et de préférence de 85 à 130°C. Le procédé selon l'invention est mené à une pression suffisante pour éviter l'ébullition des phases de l'émulsion et pour que ses différents constituants restent essentiellement dans l'émulsion (minimisation du passage en phase vapeur des différents constituants).

Ainsi, le procédé selon l'invention peut être mené partiellement, voire totalement à une température inférieure à 100°C, par exemple à une température inférieure à 95°C.

Le procédé de polymérisation selon l'invention mène à un latex de polymère. Au sein de ce latex, l'ensemble des particules de polymère présente un diamètre moyen inférieur à 2 µm et généralement compris entre 20 et 1 000 nanomètres.

Les particules de polymère peuvent comprendre des unités polymérisées d'au moins deux monomères différents dont au moins un est un acrylate ou méthacrylate. Un tel polymère peut également comprendre des unités polymérisées d'au moins un monomère vinylaromatique et/ou d'au moins un monomère diènique.

Les particules de polymère peuvent donc comprendre des unités polymérisées d'au moins un acrylate et/ou méthacrylate et des unités polymérisées d'un monomère n'étant ni un acrylate, ni un méthacrylate. Le polymère constituant ces particules peut être un polymère à blocs, et en particulier un de ceux précédemment listés.

Les particules réalisées par le procédé selon l'invention comprennent le radical libre stable, sous forme libre ou sous forme d'un groupement générateur d'un radical libre stable.

La présence du radical libre stable ou du groupement générateur de radical libre stable peut contribuer à améliorer la stabilité thermique du polymère.

Dans les exemples qui suivent, les techniques de caractérisation suivantes ont été utilisées :

- conversion de monomère en polymère : par mesure de l'extrait sec, rapporté à la masse de monomère engagée,
- diamètre moyen des particules : par diffusion de la lumière (appareil Malvern Zeta Sizer 4),
- masses moléculaires et polydispersité des polymères : par chromatographie d'exclusion stérique après lavage du polymère à l'eau pour le débarrasser des espèces hydrosolubles. Un chromatographe "Waters" a été utilisé, le tétrahydrofurane (THF) servant d'éluant. Le chromatographe était équipé de quatre colonnes de PL gel® 10µm (poly(styrène)divinylbenzène) de 100, 500, 1 000 et 10 000 Å, et d'un double détection (réfractomètre, et UV à 254 nm). L'étalonnage a été réalisé avec des échantillons de polystyrène standards. Les polymères étaient injectés à 10 mg/ml pour un débit de 1 ml/min.

## EXEMPLES 1 ET 2

Dans un réacteur en verre double enveloppe muni d'un système d'agitation et d'une régulation de température, on introduit, sous agitation, 199 g (soit 11,1 mole) d'eau puis 0,1245 g (soit $1{,}48.10^{-3}$ mole) de $NaHCO_3$. Quand le $NaHCO_3$ est entièrement dissous dans l'eau, la solution obtenue est dégazée par barbotage d'azote pendant 30 à 45 minutes pour éliminer les traces d'oxygène. La température du réacteur étant de 90°C, on ajoute 0,427 g (soit $2{,}07.10^{-3}$

mole) de styrène sulfonate de sodium (SSNa), puis 23 g ( soit 0,22 mole) de styrène mélangé à du N-tertiobutyl-1-diéthyl-phosphono-2,2-diméthyl propyl nitroxyde dont la formule développée est

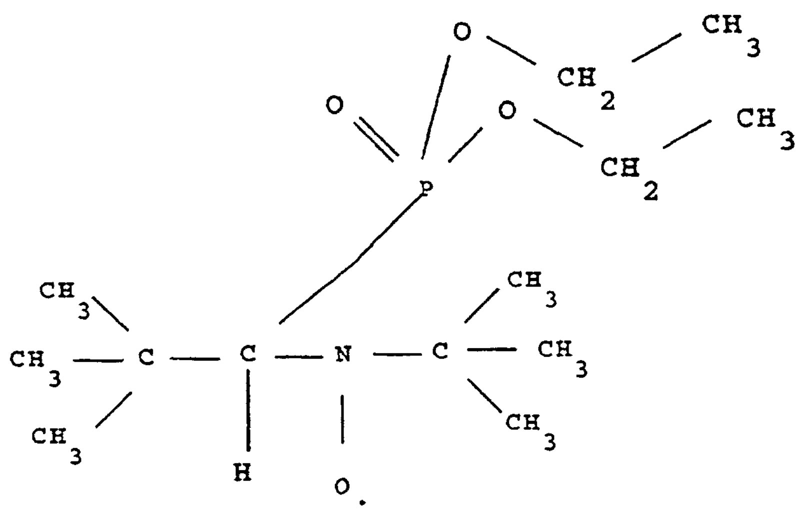

en quantité telle que le rapport [(SFR) x $F_{SFR}$] / [(AMO) x $F_{AMO}$] corresponde aux valeurs indiquées dans le tableau 1, puis 0,182 g (soit $9{,}6.10^{-4}$ mole) de $Na_2S_2O_5$ solubilisé dans 5g d'eau puis 0,254 g (soit $9{,}4.10^{-4}$ mole) de $K_2S_2O_8$ solubilisé dans 5g d'eau, ce dernier ajout marquant le temps 0 de la polymérisation. Des prélèvements de 5 ml sont réalisés tout au long de la réaction afin de

- suivre l'évolution des masses moléculaires en fonction de la conversion,
- déterminer la cinétique de réaction par gravimétrie.

Le tableau 1 rassemble les résultats. Dans le cas de l'exemple 2, après la phase de nucléation, on observe que la masse moléculaire moyenne en nombre augmente de façon sensiblement linéaire en fonction du pourcentage de conversion.

TABLE 1

| Exemple n° | $\frac{SFR \times F_{SFR}}{AMO \times F_{AMO}}$ | Temps (h) | Conversion (%) | Mn | Mw / Mn | Diamètre des particules (nm) |
|---|---|---|---|---|---|---|
| 1 | 0 | 2 | 99,3 | 48357 | 2,97 | 108 |
| 2 | | 5 | 21,1 | 1 511 | 1,27 | |
| | | 6 | 28,5 | 13 610 | 1,9 | |
| | 0,6 | 7 | 37,9 | 19 476 | 1,66 | |
| | | 8 | 44,1 | 24954 | 1,69 | |
| | | 16 | 76,8 | | 2,47 | 350 |

**EXEMPLES 3 ET** 4

On procède comme pour les exemples 1 et 2 sauf que l'on utilise 0,156 g (soit $1{,}86.10^{-3}$ mole) de $NaHCO_3$ et sauf que l'on remplace le SSNa par 0,307 g (soit $1{,}07.10^{-3}$ moles) de laurylsulfate de sodium (SDS).

Le tableau 2 rassemble les résultats.

Dans le cas de l'exemple 4, après la phase de nucléation, on observe que la masse moléculaire moyenne en nombre augmente de façon sensiblement linéaire en fonction du pourcentage de conversion, jusqu'à un pourcentage de conversion d'environ 80 %.

Dans le cas de l'exemple 4, on observe que le pH passe de 6,7 en début de polymérisation à 4,6 lorsque la conversion est d'environ 80%

TABLE 2

| Exemple n° | (SFR) x $F_{SFR}$ / (AMO) x $F_{AMO}$ | Temps | Conversion (%) | Mn | Mw/Mn | Diamètre des particules (nm) |
|---|---|---|---|---|---|---|
| 3 | 0 | 1h30min | 100 | 145 000 | 4 | 140 |
| 4 | 0,6 | 1h30min | 11,8 | 3 460 | 2,51 | |
| | | 2h | 23,2 | 6 762 | 2,23 | |
| | | 2h30min | 51,4 | 8 500 | 2,88 | |
| | | 3h | 76,4 | 13 086 | 2,76 | |
| | | 4h30min | 96,8 | | 3,46 | 115,2 |

**EXEMPLES 5 ET** 6

D'une part, on prépare une solution organique en mélangeant :

- 23 g (soit 0,22 mole) de styrène,
- du N-tertiobutyl-1-diéthyl-phosphono-2,2-diméthyl propyl nitroxyde en quantité telle que le rapport (SFR) x FSFR / (AMO) x FAMO du tableau 3 soit respecté, soit 0 mole pour l'exemple 5 et 3,12 . $10^{-4}$ mole pour l'exemple 6.
- 0,28 g d'un polystyrène de masse moléculaire moyenne en poids de 300 000,
- 1,152 g (soit 1,08.$10^{-3}$ mole) d'hexadécane,

D'autre part, on prépare une solution aqueuse en mélangeant :

- 121,1 g d'eau,
- 0,792 g (soit 2,75.$10^{-3}$ mole) de lauryl sulfate de sodium,
- 0,049 g (soit 2,6.$10^{-4}$ mole) de $Na_2S_2O_5$
- 0,069 g (soit 2,6.$10^{-4}$ mole) de $K_2S_2O_8$

Ces deux solutions sont ensuite mélangées à l'aide d'une agitation magnétique pendant 10 minutes. Le mélange est ensuite soumis à une forte turbulence par une sonde ultra-son très puissante (désintégrateur à ultra sons de 400 watts, figurant page 370 sous la référence A65.900.10 du catalogue 1996/1997 de OSI) pendant 10 minutes, de façon à obtenir une émulsion dont la taille des gouttes est de l'ordre de 100 nm. L'émulsion est ensuite dégazée pendant 10 minutes par barbotage d'azote, pour éliminer les traces d'oxygène.

L'émulsion est ensuite placée dans un réacteur double enveloppe en verre de 250 ml préalablement chauffé à 90°C et mis sous agitation de 400 révolutions par minute. Le temps 0 correspond au moment de l'introduction de l'émulsion dans le réacteur chaud. Des prélèvements de 5 ml sont réalisés tout au long de la réaction afin de

- suivre l'évolution des masses moléculaires en fonction de la conversion,
- déterminer la cinétique de réaction par gravimétrie.

Le tableau 3 rassemble les résultats.

TABLE 3

| Exemple n° | (SFR) x $F_{SFR}$ / (AMO) x $F_{AMO}$ | Temps (h) | Conversion (%) | Mn | Mw / Mn | Diamètre des particules (nm) |
|---|---|---|---|---|---|---|
| 5 | 0 | 1 | 92 | 127 400 | 4 | 213 |
| 6 | 0,6 | 1 | 14 | 22 550 | 3,48 | |
| | | 3 | 41,6 | 39540 | 2,55 | |
| | | 5 | 55,6 | 56 700 | 2,29 | |
| | | 7 | 71,8 | 71 000 | 2,82 | |
| | | 9 | 87,9 | 88 750 | 3,04 | 100 |

**EXEMPLE 7**

**A / PREPARATION D'UN AGENT EMULSIFIANT PORTEUR D'UN GROUPEMENT GENERATEUR D'UN RADICAL LIBRE STABLE**

**a) Préparation d'un bloc poly(styrenesulfonate de sodium) :**

On place dans un réacteur en verre double enveloppe de 250 ml muni d'une agitation et d'une régulation de température un mélange de 23,9 g d'eau et de 71,7 g d'éthylène glycol dans lequel on dissout ensuite 28,72 g (soit 0,14 mole) de styrène sulfonate de sodium monomère, puis 0,1835 g de $Na_2HPO_4$, puis 0,44 g (soit $1,57.10^{-3}$ mole) d'acide azo-4,4'-bis(cyano-4-pentanoïque) (ACVA), puis 0,8 g (soit $2,72.10^{-3}$ mole) de N-tertiobutyl-1-diéthyl-phosphono-2,2-diméthylpro pylnitroxyde, puis 0,106 g de soude. La solution est ensuite dégazée par barbotage d'azote pendant 10 minutes pour éliminer les traces d'oxygène.

Le réacteur est ensuite porté à 125°C pendant 48 heures, puis refroidi. Le polymère formé est précipité deux fois dans le méthanol, puis filtré et séché en étuve sous vide à 50°C pendant 24 heures.

**B) PREPARATION D'UN COPOLYMERE A BLOCS POLYSTYRENE-b-POLY(STYRENESULFONATE DE SODIUM) :**

Dans le même réacteur qu'au a), on place un mélange de 7,5 g d'eau et 22,5 g d'éthylène glycol, puis 5 g du polymère préparé au a), lequel se dissout, puis 1 g (soit $9,6.10^{-3}$ mole) de styrène, puis 0,8 g (soit $2,72.10^{-3}$ mole) de N-tertiobutyl-1-diéthyl-phosphono-2,2-diméthylpropylnitroxyde. La solution obtenue est ensuite dégazée par barbotage d'azote pendant 10 minutes pour éliminer les traces d'oxygène.

Le réacteur est ensuite porté à 125°C pendant 24 heures, puis refroidi et son contenu est dilué par 20 g d'eau déminéralisée. La solution est ensuite passée à l'évaporateur rotatif sous vide à température ambiante de façon à éliminer l'éventuel styrène monomère résiduel. La solution obtenue est diafiltrée pendant quatre jours par passage sur une membrane coupant à 1000 g/mole. Le copolymère est enfin isolé par évaporation totale des solvants (eau-éthylène glycol) à l'évaporateur rotatif sous vide à 50°C puis séchage en étuve sous vide à 50°C pendant 24 heures.

**B / PREPARATION D'UN COPOLYMERE A BLOCS POLYSTYRENE-b-POLYACRYLATE DE BUTYLE PAR POLYMERISATION EN EMULSION.**

Dans le même réacteur que précédemment, on place 104,7 g d'eau, 0,26 g de l'agent émulsifiant préparé en A / (lequel porte un groupement générateur de radical libre stable par chaîne d'agent émulsifiant ), puis 0,0135 g (soit $9,5.10^{-5}$ mole) de $Na_2HPO_4$ (composé tampon pH), puis 0,065 g (soit $6,25.10^{-4}$ mole) de styrène.

La solution obtenue est dégazée par barbotage à l'azote pendant 10 minutes de façon à éliminer les traces d'oxygène.

Le réacteur est ensuite porté à 90°C pendant sept heures, ce qui produit la polymérisation du styrène. Le réacteur étant maintenu à 90°C, on ajoute 22,5 g (soit 0,176 mole) d'acrylate de butyle et 0,045 g (soit $2,36.10^{-4}$ mole) de $K_2S_2O_8$, et on laisse polymériser à 90°C pendant 18 heures.

L'analyse en chromatographie d'exclusion stérique démontre que le bloc d'acrylate de butyle est bien lié au bloc de polystyrène.

**EXEMPLE 8**

On procède comme pour l'exemple 4, sauf que l'on remplace le $NaHCO_3$ par le même nombre de moles de $K_2CO_3$. On obtient une conversion de 8,4 % en 7 heures de polymérisation. On a obtenu un latex dont le diamètre moyen des particules est de 375 nm. On observe que le pH passe de 7,5 en début de polymérisation à 8,6 lorsque la conversion arrive à 8,4 %. On peut comparer cet exemple à l'exemple 4. On observe ainsi que le maintien du pH à une valeur supérieure à 7 s'est traduit par une vitesse de polymérisation plus faible.

**EXEMPLE 9**

**A ) PREPARATION D'UN POLYSTYRENE PORTEUR D'UN GROUPEMENT GENERATEUR D'UN RADICAL LIBRE STABLE :**

Dans un ballon tricol de 100 ml sous agitation magnétique, on place :

- 50 g (soit 0,48 mole) de styrène,
- 0,273 g (1 ,66.$10^{-3}$ mole) d'azobisisobutyronitrile (AIBN),
- 0,694 g (soit 2,36 . $10^{-3}$ mole) de N-tertiobutyl-1-diéthylphosphono- 2,2- diméthyl propyl nitroxyde.

On dégaze à l'azote une heure à la température ambiante, puis l'on chaufe à 90°C pendant 4h30 min sous agitation. Le produit obtenu est précipité dans le méthanol, puis filtré et séché à 50°C sous vide. Le polymère présente une Mn de 5200 et une polymolécularité de 1,45.

**B ) POLYMERISATION EN MINIEMULSION EN PRESENCE DU PS PORTEUR PREPARE EN A :**

D'une part, on prépare une solution organique en mélangeant :

- 23 g (soit 0,22 mole) de styrène,
- 1,104 g (soit 4,88.$10^{-3}$ mole) d'hexadécane,
- 1,3 g du polystyrène porteur d'un groupement générateur de N-tertiobutyl-1-1 diéthyl-phosphono-2,2-diméthyl propyl nitroxyde, (et apportant au total 2,5.$10^{-4}$ mole du radical libre stable) préparé en A,
- 0,01 g (soit 3,4.$10^{-5}$ mole) de N-tertiobutyl-1-diéthylphosphono-2,2-diméthyl propyl nitroxyde.

D'autre part, on prépare une solution aqueuse en mélangeant :

- 207 g (soit 11,5 moles) d'eau,
- 0,936 g (soit 3,25.$10^{-3}$ moles) de Laurylsulfate de sodium.
- 0,156 g (soit 1,86.$10^{-3}$ mole) de $NaHCO_3$.

Ces deux solutions sont ensuite mélangées à l'aide d'une agitation magnétique pendant 10 minutes. Le mélange est ensuite soumis à une forte turbulence par une sonde ultra-son très puissante (désintégrateur à ultra sons de 400 Watts, figurant page 370 sous la référence A65.900.10 du catalogue 1996/1997 de OSI) pendant 10 minutes, de façon à obtenir une émulsion dont la taille des gouttes est de l'ordre de 100 nm. L'émulsion est ensuite dégazée pendant 10 minutes par barbotage d'azote, pour éliminer les traces d'oxygène.

L'émulsion est ensuite placée dans une réacteur double enveloppe en verre de 250 ml préalablement chauffé à 90°C et mis sous agitation de 400 révolutions par minute. Le temps 0 correspond au moment de l'introduction de l'émulsion dans le réacteur chaud. Des prélèvements de 5 ml sont réalisés tout au long de la réaction afin de

- suivre l'évolution des masses moléculaires en fonction de la conversion,
- déterminer la cinétique de réaction par gravimétrie.

Le tableau 4 rassemble les résultats.

On observe que le pH passe de 8,1 en début de polymérisation à 8,8 lorsque la conversion est de 4,8 %.

TABLEAU 4

| Exemple n° | Temps (h) | Conversion (%) | Mn | Mw / Mn | Diamètre des particules (nm) |
|---|---|---|---|---|---|
| 9 | 7 | 4,8 | 7020 | 1,48 | 137 |

**EXEMPLE 10**

**A) SYNTHESE DU N-TERTIOBUTYL, N-1-DIETHYLPHOSPHONO-2,2-DIMETHYLPROPYL, O-1PHENYLETHYLHYDROXYLAMINE (1) :**

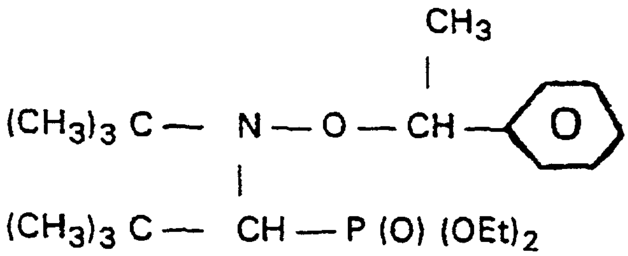

(1)

Dans un tube de Schlenk de 100 ml purgé à l'argon, on introduit 0,57 g de CuBr (4 mmol) et 1 ,25 g de 2,2'-bipyridine (8 mmol). On ajoute 0,74 g de (1-bromoéthyl)benzène (4 mmol) et 0,68 g de DEPN 86 % (2 mmol) dissous dans 9 ml de toluène anhydre. Sous agitation, on laisse réagir pendant 48 heures à température ambiante. Le mélange réactionnel est filtré sur célite. Le filtrat est lavé avec une solution aqueuse à 5 % de sulfate de cuivre, puis à l'eau. La phase organique est séchée sur sulfate de magnésium, puis le solvant est évaporé. Le produit est purifié par chromatographie sur colonne de silice en utilisant un éluant pentane/éther 6/4. On obtient 0,75 g du composé (1) (rendement = 95 %) sous la forme de deux diastéréoisomères dans des proportions 64/36 déterminées sur le spectre $^{31}P$ du mélange brut par intégration des signaux à 23,14 et 24,36 ppm (I/II = 64/36).

**B) Polymérisation en miniémulsion en présence de l'alkoxyamine préparée en A :**

**Synthèse d'un bloc PABu (polyacrylate de butyle) :**

D'une part, on prépare une solution organique en mélangeant :

- 17,5 g (soit 0,134 mole) d'acrylate de butyle,
- 0,17 g d'un polystyrène de masse molaire moyenne en poids de 300 000 (en tant que polymère hydrophobe),
- 0,7 g (soit $6,56.10^{-4}$ mole) d'hexadécane,
- 0,686 g (soit $1,72.10^{-3}$ mole) de l'alcoxyamine préparée en A.

D'autre part, on prépare une solution aqueuse en mélangeant :

- 173,8 g (soit 9,66 moles d'eau),
- 0,566 g (soit $1,97.10^{-3}$ mole) de lauryl sulfate de sodium,
- 0,686 g (soit $1,29.10^{-3}$ mole) de perfluoro octyl acétate de potassium.

Ces deux solutions sont ensuite mélangés à l'aide d'une agitation magnétique pendant 10 minutes. Le mélange est ensuite soumis à une forte turbulence par une sonde ultra-son très puissante pendant 10 min, de façon à obtenir une émulsion dont la taille des gouttes est de l'ordre de 100 nm. L'émulsion est ensuite dégazée pendant 10 min par barbotage d'azote, pour éliminer les traces d'oxygène.

L'émulsion est ensuite placée dans un réacteur double enveloppe en inox de 250 ml, pouvant supporter une pression au moins égale à 5 bars, muni d'un système d'agitation et d'une régulation de température. Après mise sous agitation à 400 t/min et après un cycle de dégazage à l'azote, une surpression d'azote de 3 bars est introduite dans le réacteur pour éviter l'ébullition de l'eau à 125°C. La consigne de température du réacteur est placée à 120°C, et celle de la double enveloppe à 125°C. Le temps 0 correspond au moment où le réacteur est à 125°C. Après 5 heures de réaction à 125°C, le mélange réactionnel est refroidit et un échantillon de latex obtenu est prélevé. Les résultats sont rassemblés dans le tableau ci-dessous.

| Conversion (%) | Mn | Mw / Mn |
|---|---|---|
| 84,5 | 10 810 | 2,5 |

Synthèse d'un bloc de polystyrène accolé au bloc précédent en PABu :

- 121 g du latex obtenu précédemment sont gardés dans le réacteur. L'agitation est remise à 400 t/min, puis
- 5,3 g (soit $5,1.10^{-2}$ mole) de styrène, puis
- 0,176 g (soit $6,13.10^{-4}$ mole) de lauryl sulfate de sodium sont ajoutés.

Le mélange est gardé une nuit sous agitation à température ambiante pour laisser le styrène entrer dans les particules de latex déjà formées.

Après un cycle de dégazage à l'azote, une surpression d'azote de 3 bars est introduite dans le réacteur. Puis la consigne de température du réacteur est remise à 120°C, et celle de la double enveloppe à 125°C. Après 6 heures de réaction à 125°C, le mélange réactionnel est refroidit et un échantillon est prélevé.

Les résultats sont rassemblés dans le tableau ci-dessous :

| Conversion (%) | Mn | Mw / Mn |
|---|---|---|
| 83,4 global | 19 630 | 1,8 |

Le déplacement du pic chromatographique d'exclusion stérique démontre que le bloc de styrène est bien lié au bloc de polyacrylate de butyle.

## Revendications

1. Procédé de polymérisation en émulsion d'au moins un monomère polymérisable par voie radicalaire en présence d'un radical libre stable et d'un agent émulsifiant, l'émulsion comprenant une phase aqueuse liquide continue comprenant au moins 50 % en poids d'eau et une phase organique liquide comprenant plus de 50 % en poids de monomère(s) à polymériser.

2. Procédé selon la revendication 1, **caractérisé en ce que** le radical libre stable comprend l'enchaînement

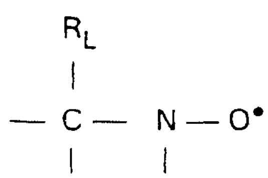

dans laquelle le radical $R_L$ présente une masse molaire supérieure à 15.

3. Procédé selon la revendication 2 **caractérisée en ce que** le radical $R_L$ présente une masse molaire supérieure à 30.

4. Procédé selon la revendication 3 **caractérisé en ce que** le radical $R_L$ présente une masse molaire comprise entre 40 et 450.

5. Procédé selon la revendication 4 **caractérisé en ce que** le radical $R_L$ peut être représenté par la formule

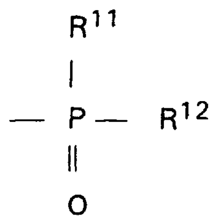

dans laquelle $R^{11}$ et $R^{12}$, pouvant être identiques ou différents, peuvent être choisis parmi les radicaux alkyle, cycloalkyle, alkoxyle, aryloxyle, aryle, aralkyloxyle, perfluoroalkyle, aralkyle, halogène.

**6.** Procédé selon la revendication 5, **caractérisé en ce que** le radical libre stable est le N-tertiobutyl-1-diéthyl-phosphono-2,2-diméthylpropylnitroxyde.

**7.** Procédé selon l'une des revendications précédentes, **caractérisé en ce que** le radical libre stable est introduit en quantité telle que (SFR) x $F_{SFR}$ aille de $1.10^{-1}$ à $1.10^{-3}$ mole par mole de monomère, (SFR) représentant le nombre de moles de radical libre stable, et $F_{SFR}$ représentant la fonctionnalité du radical libre stable.

**8.** Procédé selon l'une des revendications précédentes, **caractérisé en ce que** le radical libre stable est soluble dans l'eau à 25°C à raison d'au moins 0,1 g/litre d'eau.

**9.** Procédé selon la revendication 8 **caractérisée en ce que** le radical libre stable est soluble dans l'eau à 25°C à raison d'au moins 1g / litre d'eau.

**10.** Procédé selon l'une des revendications précédentes **caractérisé en ce qu'**un amorceur de polymérisation radicalaire soluble dans la phase aqueuse à 25°C à raison d'au moins 1 g / litre, est introduit.

**11.** Procédé selon la revendication précédente **caractérisé en ce que** l'amorceur est introduit de façon à ce que (AMO) x $F_{AMO}$ aille de $1.10^{-4}$ à $1.10^{-1}$ mole par mole de monomère, (AMO) représentant le nombre de moles d'amorceur et $F_{AMO}$ représentant la fonctionnalité de l'amorceur.

**12.** Procédé selon la revendication 10 ou 11 **caractérisé en ce que** [$F_{SFR}$ x (SFR)] / [ $F_{AMO}$ x (AMO)] va de 0,1 à 5.

**13.** Procédé selon l'une des revendications précédentes **caractérisé en ce que** l'agent émulsifiant est introduit à raison de 1 à 10 % en masse par rapport à la masse de monomère.

**14.** Procédé selon l'une des revendications précédentes **caractérisé en ce que** le radical libre stable est introduit dans le milieu de polymérisation sous la forme de radical libre stable ou d'une molécule comprenant un groupement capable de générer un radical libre stable.

**15.** Procédé selon la revendication précédente, **caractérisé en ce que** le radical libre stable est introduit dans le milieu de polymérisation sous forme liée à l'agent émulsifiant, de sorte que l'agent émulsifiant est porteur d'un groupement générateur du radical libre stable.

**16.** Procédé selon l'une des revendications précédentes **caractérisé en ce que** l'émulsion est une miniémulsion.

**17.** Procédé selon l'une des revendications précédentes **caractérisé en ce que** le monomère est un acrylate et/ou méthacrylate.

**18.** Procédé selon l'une des revendications précédentes **caractérisé en ce que** différents monomères sont introduits successivement dans le milieu de polymérisation de façon à former un polymère à blocs.

**19.** Procédé selon la revendication 18 **caractérisé en ce qu'**un amorceur est ajouté au moment de l'ajout d'un nouveau monomère.

**20.** Procédé selon l'une des revendications précédentes **caractérisé en ce qu'**il est mené, au moins partiellement, à

une température allant de 85 à 130°C.

**21.** Procédé selon l'une des revendications précédentes **caractérisé en ce que** le pH est maintenu entre 5 et 8,5.

**22.** Procédé selon l'une des revendications précédentes **caractérisé en ce que** le pH est inférieur à 7.

**23.** Procédé selon l'une des revendications précédentes **caractérisé en ce que** le pH est compris entre 6 et 7.

**24.** Procédé selon l'une des revendications précédentes **caractérisé en ce que** la polymérisation commence par des unités du type acrylate.

**25.** Procédé selon l'une des revendications précédentes **caractérisé en ce qu'**il est mené, au moins partiellement à une température inférieure à 100° C.

**26.** Procédé selon la revendication précédente **caractérisé en ce qu'**il est mené totalement à une température inférieure à 100° C.

**27.** Procédé selon l'une des revendications précédentes **caractérisé en ce qu'**il est mené, au moins partiellement à une température inférieure à 95°C.

**28.** Procédé selon la revendication précédente **caractérisé en ce qu'**il est mené totalement à une température inférieure à 95° C.

**29.** Particule de polymère obtenue suivant le procédé de l'une des revendications 1 à 28 comprenant des unités polymérisées d'au moins deux monomères différents dont au moins un est un acrylate ou méthacrylate.

**30.** Particule selon la revendication précédente **caractérisée en ce que** le polymère comprend des unités polymérisées d'au moins un monomère vinylaromatique et/ou d'au moins un monomère diénique.

**31.** Particule selon la revendication 29 ou 30 **caractérisée en ce qu'**il comprend des unités polymérisées d'un monomère n'étant ni un acrylate ni un méthacrylate.

**32.** Particule selon l'une des revendications 29 à 31 **caractérisé en ce que** le polymère est un polymère à blocs.

**33.** Particule selon la revendication 29 **caractérisée en ce que** le polymère est l'un des suivants :

polystyrène-b-polyméthacrylate de méthyle,
polyméthacrylate de méthyle-b-polyacrylate d'éthyle,
polystyrène-b-polyacrylate de butyle,
polybutadiène-b-polyméthacrylate de méthyle,
polystyrène-co-acrylate de butyle-b-polyméthacrylate de méthyle,
polystyrène-b-polyacrylate de 2-éthylhexyle,
polystyrène-b-polyméthacrylate de méthyle-co-acrylate d'hydroxyéthyle,
polystyrène-b-polybutadiène-b-polyméthacrylate de méthyle,
polybutadiène-b-polystyrène-b-polyméthacrylate de méthyle,
polystyrène-b-polyacrylate de butyle-b-polystyrène,
polyacrylate de perfluorooctyle-b-polyméthacrylate de méthyle,
polyacrylate de perfluorooctyle-b-polystyrène,
polyacrylate de perfluorooctyle-b-polyacrylate de behenyle,
polyacrylate de perfluorooctyle-b-polyméthacrylate stéaryle,
polyacrylate de n-octyle-b-polyméthacrylate de méthyle.

**34.** Particule selon l'une des revendications 29 à 33 **caractérisé en ce qu'**elle comprend un radical libre stable ou un groupement générateur d'un radical libre stable.

**35.** Ensemble de particules selon l'une des revendications 29 à 34 **caractérisé en ce que** le diamètre moyen desdites particules est inférieur à 2 µm.

**36.** Ensemble de particules selon la revendication précédente **caractérisé en ce que** le diamètre moyen desdites particules est compris entre 20 et 1 000 nanomètres.

**37.** Latex comprenant un ensemble de particules de l'une des revendications 35 ou 36.

## Claims

**1.** Process for the emulsion polymerization of at least one monomer which can be polymerized by the radical route in the presence of a stable free radical and of an emulsifying agent, the emulsion comprising a continuous liquid aqueous phase comprising at least 50% by weight of water and a liquid organic phase comprising more than 50% by weight of monomer(s) to be polymerized.

**2.** Process according to Claim 1, **characterized in that** the stable free radical comprises the linkage

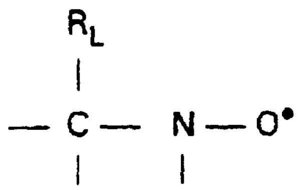

in which the $R_L$ radical exhibits a molar mass of greater than 15.

**3.** Process according to Claim 2, **characterized in that** the $R_L$ radical exhibits a molar mass of greater than 30.

**4.** Process according to Claim 3, **characterized in that** the $R_L$ radical exhibits a molar mass of between 40 and 450.

**5.** Process according to Claim 4, **characterized in that** the $R_L$ radical can be represented by the formula

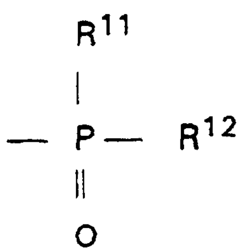

in which $R^{11}$ and $R^{12}$, which can be identical or different, can be chosen from alkyl, cycloalkyl, alkoxy, aryloxy, aryl, aralkyloxy, perfluoroalkyl, aralkyl or halogen radicals.

**6.** Process according to Claim 5, **characterized in that** the stable free radical is N-tert-butyl-1-diethylphosphono-2,2-dimethylpropyl nitroxide.

**7.** Process according to one of the preceding claims, **characterized in that** the stable free radical is introduced in an amount such that (SFR) $\times$ $F_{SFR}$ ranges from $1 \times 10^{-1}$ to $1 \times 10^{-3}$ mol per mole of monomer, (SFR) representing the number of moles of stable free radical and $F_{SFR}$ representing the functionality of the stable free radical.

**8.** Process according to one of the preceding claims, **characterized in that** the stable free radical is soluble in water at 25°C in a proportion of at least 0.1 g/litre of water.

**9.** Process according to Claim 8, **characterized in that** the stable free radical is soluble in water at 25°C in a proportion of at least 1 g/litre of water.

**10.** Process according to one of the preceding claims, **characterized in that** a radical polymerization initiator which is soluble in the aqueous phase at 25°C in a proportion of at least 1 g/litre is introduced.

**11.** Process according to the preceding claim, **characterized in that** the initiator is introduced so that (INI) × $F_{INI}$ ranges from $1 \times 10^{-4}$ to $1 \times 10^{-1}$ mol per mole of monomer, (INI) representing the number of moles of initiator and $F_{INI}$ representing the functionality of the initiator.

**12.** Process according to Claim 10 or 11, **characterized in that** $[F_{SFR} \times (SFR)]/[F_{INI} \times (INI)]$ ranges from 0.1 to 5.

**13.** Process according to one of the preceding claims, **characterized in that** the emulsifying agent is introduced in a proportion of 1 to 10% by mass with respect to the mass of monomer.

**14.** Process according to one of the preceding claims, **characterized in that** the stable free radical is introduced into the polymerization medium in the form of a stable free radical or of a molecule comprising a group capable of generating a stable free radical.

**15.** Process according to the preceding claim, **characterized in that** the stable free radical is introduced into the polymerization medium in the form bonded to the emulsifying agent, so that the emulsifying agent is carrying a group generating the stable free radical.

**16.** Process according to one of the preceding claims, **characterized in that** the emulsion is a miniemulsion.

**17.** Process according to one of the preceding claims, **characterized in that** the monomer is an acrylate and/or methacrylate.

**18.** Process according to one of the preceding claims, **characterized in that** different monomers are introduced successively into the polymerization medium, so as to form a block polymer.

**19.** Process according to Claim 18, **characterized in that** an initiator is added at the moment of the addition of a new monomer.

**20.** Process according to one of the preceding claims, **characterized in that** it is carried out, at least partially, at a temperature ranging from 85 to 130°C.

**21.** Process according to one of the preceding claims, **characterized in that** the pH is maintained between 5 and 8.5.

**22.** Process according to one of the preceding claims, **characterized in that** the pH is less than 7.

**23.** Process according to one of the preceding claims, **characterized in that** the pH is between 6 and 7.

**24.** Process according to one of the preceding claims, **characterized in that** the polymerization begins with units of the acrylate type.

**25.** Process according to one of the preceding claims, **characterized in that** it is carried out, at least partially, at a temperature of less than 100°C.

**26.** Process according to the preceding claim, **characterized in that** it is carried out completely at a temperature of less than 100°C.

**27.** Process according to one of the preceding claims, **characterized in that** it is carried out, at least partially, at a temperature of less than 95°C.

**28.** Process according to the preceding claim, **characterized in that** it is carried out completely at a temperature of less than 95°C.

**29.** Polymer particle obtained according to the process of one of Claims 1 to 28 comprising polymerized units of at least two different monomers, at least one of which is an acrylate or methacrylate.

30. Particle according to the preceding claim, **characterized in that** the polymer comprises polymerized units of at least one vinylaromatic monomer and/or of at least one diene monomer.

31. Particle according to Claim 29 or 30, **characterized in that** it comprises polymerized units of a monomer which is neither an acrylate nor a methacrylate.

32. Particle according to one of Claims 29 to 31, **characterized in that** the polymer is a block polymer.

33. Particle according to Claim 29, **characterized in that** the polymer is one of the following:

polystyrene-b-poly(methyl methacrylate),
poly(methyl methacrylate)-b-poly(ethyl acrylate),
polystyrene-b-poly(butyl acrylate),
polybutadiene-b-poly(methyl methacrylate),
poly(styrene-co-butyl acrylate)-b-poly(methyl methacrylate),
polystyrene-b-poly(2-ethylhexyl acrylate),
polystyrene-b-poly(methyl methacrylate-co-hydroxyethyl acrylate),
polystyrene-b-polybutadiene-b-poly(methyl methacrylate),
polybutadiene-b-polystyrene-b-poly(methyl methacrylate),
polystyrene-b-poly(butyl acrylate)-b-polystyrene,
poly(perfluorooctyl acrylate)-b-poly(methyl methacrylate),
poly(perfluorooctyl acrylate)-b-polystyrene,
poly(perfluorooctyl acrylate)-b-poly(behenyl acrylate),
poly(perfluorooctyl acrylate)-b-poly(stearyl methacrylate),
poly(n-octyl acrylate)-b-poly(methyl methacrylate).

34. Particle according to one of Claims 29 to 33, **characterized in that** it comprises a stable free radical or a group generating a stable free radical.

35. Combination of particles according to one of Claims 29 to 34, **characterized in that** the mean diameter of the said particles is less than 2 µm.

36. Combination of particles according to the preceding claim, **characterized in that** the mean diameter of the said particles is between 20 and 1000 nanometres.

37. Latex comprising a combination of particles of either of Claims 35 and 36.

## Patentansprüche

1. Verfahren zur Emulsionspolymerisation mindestens eines radikalisch polymerisierbaren Monomers in Gegenwart eines stabilen freien Radikals und eines Emulgators, wobei die Emulsion eine kontinuierliche flüssige wässrige Phase, die mindestens 50 Gew.-% Wasser umfasst, und eine flüssige organische Phase umfasst, die mehr als 50 Gew.-% zu polymerisierende(s) Monomer(e) umfasst.

2. Verfahren nach Anspruch 1, **dadurch gekennzeichnet, dass** das stabile freie Radikal die Verbindung

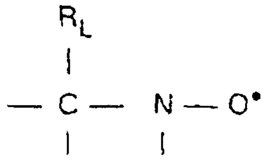

umfasst, wobei der Rest $R_L$ eine Molekülmasse von mehr als 15 aufweist.

**3.** Verfahren nach Anspruch 2, **dadurch gekennzeichnet, dass** der Rest $R_L$ eine Molekülmasse von mehr als 30 aufweist.

**4.** Verfahren nach Anspruch 3, **dadurch gekennzeichnet, dass** der Rest $R_L$ eine Molekülmasse zwischen 40 und 450 aufweist.

**5.** Verfahren nach Anspruch 4, **dadurch gekennzeichnet, dass** der Rest $R_L$ durch die folgende Formel dargestellt werden kann:

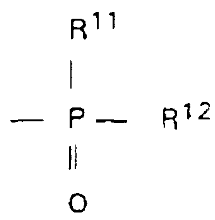

wobei $R^{11}$ und $R^{12}$, die gleich oder verschieden sein können, aus Alkyl-, Cycloalkyl-, Alkoxyl-, Aryloxyl-, Aryl-, Aralkyloxyl-, Perfluoralkyl-, Aralkyl-, Halogenresten ausgewählt sein können.

**6.** Verfahren nach Anspruch 5, **dadurch gekennzeichnet, dass** das stabile freie Radikal N-Tertiobutyl-1-diethylphosphono-2,2-dimethylpropylnitroxid ist.

**7.** Verfahren nach einem der vorhergehenden Ansprüche, **dadurch gekennzeichnet, dass** das stabile freie Radikal in einer derartigen Menge eingebracht wird, dass (SFR) x $F_{SFR}$ von $1 \cdot 10^{-1}$ bis $1 \cdot 10^{-3}$ mol pro mol Monomer reicht, wobei (SFR) die Anzahl mol des stabilen freien Radikals angibt und $F_{SFR}$ die Funktionalität des stabilen freien Radikals angibt.

**8.** Verfahren nach einem der vorhergehenden Ansprüche, **dadurch gekennzeichnet, dass** das stabile freie Radikal in Wasser bei 25°C zu mindestens 0,1 g/Liter Wasser löslich ist.

**9.** Verfahren nach Anspruch 8, **dadurch gekennzeichnet, dass** das stabile freie Radikal in Wasser bei 25°C zu mindestens 1 g/Liter Wasser löslich ist.

**10.** Verfahren nach einem der vorhergehenden Ansprüche, **dadurch gekennzeichnet, dass** ein Radikalpolymerisationsstarter, der in der wässrigen Phase bei 25°C zu mindestens 1 g/Liter löslich ist, eingebracht wird.

**11.** Verfahren nach dem vorhergehenden Anspruch, **dadurch gekennzeichnet, dass** der Starter derart eingebracht wird, dass (AMO) x $F_{AMO}$ von $1 \cdot 10^{-4}$ bis $1 \cdot 10^{-1}$ mol pro mol Monomer reicht, wobei (AMO) die Anzahl mol des Starters angibt und $F_{AMO}$ die Funktionalität des Starters angibt.

**12.** Verfahren nach Anspruch 10 oder 11, **dadurch gekennzeichnet, dass** [$F_{SFR}$ x (SFR)]/[$F_{AMO}$ x (AMO)] von 0,1 bis 5 reicht.

**13.** Verfahren nach einem der vorhergehenden Ansprüche, **dadurch gekennzeichnet, dass** der Emulgator zu 1 bis 10 Gew.-%, bezogen auf das Gewicht des Monomers, eingebracht wird.

**14.** Verfahren nach einem der vorhergehenden Ansprüche, **dadurch gekennzeichnet, dass** das stabile freie Radikal in das Polymerisationsmedium in Form des stabilen freien Radikals oder eines Moleküls eingebracht wird, das eine Gruppe umfasst, die ein stabiles freies Radikal erzeugen kann.

**15.** Verfahren nach dem vorhergehenden Anspruch, **dadurch gekennzeichnet, dass** das stabile freie Radikal in das Polymerisationsmedium in einer an den Emulgator gebundenen Form derart eingebracht wird, dass der Emulgator eine Gruppe trägt, die ein stabiles freies Radikal erzeugt.

16. Verfahren nach einem der vorhergehenden Ansprüche, **dadurch gekennzeichnet, dass** die Emulsion eine Miniemulsion ist.

17. Verfahren nach einem der vorhergehenden Ansprüche, **dadurch gekennzeichnet, dass** das Monomer ein Acrylat und/oder Methacrylat ist.

18. Verfahren nach einem der vorhergehenden Ansprüche, **dadurch gekennzeichnet, dass** verschiedene Monomere nacheinander in das Polymerisationsmedium derart eingebracht werden, das Blockpolymere gebildet werden.

19. Verfahren nach Anspruch 18, **dadurch gekennzeichnet, dass** ein Starter im Moment der Zugabe eines neuen Monomers zugegeben wird.

20. Verfahren nach einem der vorhergehenden Ansprüche, **dadurch gekennzeichnet, dass** es mindestens teilweise bei einer Temperatur von 85 bis 130°C durchgeführt wird.

21. Verfahren nach einem der vorhergehenden Ansprüche, **dadurch gekennzeichnet, dass** der pH zwischen 5 und 8,5 gehalten wird.

22. Verfahren nach einem der vorhergehenden Ansprüche, **dadurch gekennzeichnet, dass** der pH kleiner als 7 ist.

23. Verfahren nach einem der vorhergehenden Ansprüche, **dadurch gekennzeichnet, dass** der pH zwischen 6 und 7 beträgt.

24. Verfahren nach einem der vorhergehenden Ansprüche, **dadurch gekennzeichnet, dass** die Polymerisation mit Einheiten des Acrylattyps beginnt.

25. Verfahren nach einem der vorhergehenden Ansprüche, **dadurch gekennzeichnet, dass** es mindestens teilweise bei einer Temperatur unter 100°C durchgeführt wird.

26. Verfahren nach dem vorhergehenden Anspruch, **dadurch gekennzeichnet, dass** es völlig bei einer Temperatur unter 100°C durchgeführt wird.

27. Verfahren nach einem der vorhergehenden Ansprüche, **dadurch gekennzeichnet, dass** es mindestens teilweise bei einer Temperatur unter 95°C durchgeführt wird.

28. Verfahren nach dem vorhergehenden Anspruch, **dadurch gekennzeichnet, dass** es völlig bei einer Temperatur unter 95°C durchgeführt wird.

29. Polymerteilchen, das gemäß dem Verfahren nach einem der Ansprüche 1 bis 28 erhalten wird und polymerisierte Einheiten aus mindestens zwei verschiedenen Monomeren, von denen mindestens eines ein Acrylat oder Methacrylat ist, umfasst.

30. Teilchen nach dem vorhergehenden Anspruch, **dadurch gekennzeichnet, dass** das Polymer polymerisierte Einheiten aus mindestens einem vinylaromatischen Monomer und/oder mindestens einem Dien-Monomer umfasst.

31. Teilchen nach Anspruch 29 oder 30, **dadurch gekennzeichnet, dass** es polymerisierte Einheiten aus einem Monomer umfasst, das weder ein Acrylat noch ein Methacrylat ist.

32. Teilchen nach einem der Ansprüche 29 bis 31, **dadurch gekennzeichnet, dass** das Polymer ein Blockpolymer ist.

33. Teilchen nach Anspruch 29, **dadurch gekennzeichnet, dass** das Polymer eines der Folgenden ist:

    Polystyrol-b-Polymethylmethacrylat,
    Polymethylmethacrylat-b-Polyethylacrylat,
    Polystyrol-b-Polybutylacrylat,
    Polybutadien-b-Polymethylmethacrylat,
    Polystyrol-co-Butylacrylat-b-Polymethylmethacrylat,
    Polystyrol-b-Poly(2-ethylhexylacrylat),

Polystyrol-b-Polymethylmethacrylat-co-Hydroxyethylacrylat,
Polystyrol-b-Polybutadien-b-Polymethylmethacrylat,
Polybutadien-b-Polystyrol-b-Polymethylmethacrylat,
Polystyrol-b-Polybutylacrylat-b-Polystyrol,
Polyperfluoroctylacrylat-b-Polymethylmethacrylat,
Polyperfluoroctylacrylat-b-Polystyrol,
Polyperfluoroctylacrylat-b-Polybehenylacrylat,
Polyperfluoroctylacrylat-b-Polystearylmethacrylat,
Poly(n-octylacrylat)-b-Polymethylmethacrylat.

**34.** Teilchen nach einem der Ansprüche 29 bis 33, **dadurch gekennzeichnet, dass** es ein stabiles freies Radikal oder eine Gruppe, die ein stabiles freies Radikal erzeugt, umfasst.

**35.** Gruppe von Teilchen nach einem der Ansprüche 29 bis 34, **dadurch gekennzeichnet, dass** der mittlere Durchmesser der Teilchen kleiner als 2 µm ist.

**36.** Gruppe von Teilchen nach dem vorhergehenden Anspruch, **dadurch gekennzeichnet, dass** der mittlere Durchmesser der Teilchen zwischen 20 und 1000 Nanometer beträgt.

**37.** Latex, umfassend eine Gruppe von Teilchen nach Anspruch 35 oder 36.